# EUROPÄISCHE PATENTSCHRIFT

(11) **EP 0 568 788 B1**
(45) Veröffentlichungstag und Bekanntmachung des Hinweises auf die Patenterteilung: **11.11.1998**
(21) Anmeldenummer: 93103543.0
(22) Anmeldetag: 05.03.1993
(51) Int. Cl.: A21B 3/07

(54) **Verfahren und Vorrichtung zum Überführen von gegärten Teiglingen**
Method and device for transferring proofed doughpieces
Procédé et dispositif de transfert des pâtons fermentés

(30) Priorität: 07.05.1992 DE 4214484
(43) Veröffentlichungstag der Anmeldung: 10.11.1993
(73) Patentinhaber: Werner & Pfleiderer Lebensmitteltechnik GmbH, 91550 Dinkelsbühl (DE)
(72) Erfinder: Knost, Dieter, Dipl.-Ing., W-7188 Fichtenau (DE); Joukainen, Jukka, SF-49540 Metsäkylä (FI)
(74) Vertreter: Rau, Manfred, Dr. Dipl.-Ing.

(56) Entgegenhaltungen:
- EP-A- 0 063 400
- EP-A- 0 231 831
- FR-A- 2 492 224

## Beschreibung

Die Erfindung betrifft ein Verfahren nach dem Oberbegriff des Anspruches 1 und eine Vorrichtung zur Durchführung des Verfahrens nach dem Oberbegriff des Anspruches 3.

Verfahren und Anlagen zur automatisierten Überführung von gegärten Teiglingen von einem Gärschrank zu einer Ofenanlage sind in vielen Varianten bekannt. In der Regel durchlaufen die Teiglinge kontinuierlich einen Gärschrank und werden an der Ausgabestation, die meistens gegenüber der Aufgabestation angeordnet ist, auf ein Zwischenband oder Backunterlage abgelegt und zu einem der Ofenanlage angepassten Teiglingsverband formiert und einem Durchlaufofen oder Etagenbackofen zugeführt.

Aus der EP 00 63 400 B1 ist es bekannt, gegärte Teigstücke von einem Gärtransport (Zwischenband) mittels eines als Krabbeleinrichtung ausgebildeten Überführungsbandes aufzunehmen und sensorgesteuert auf eine Ofenunterlage im gewünschten Abstand zu dort bereits vorhandenen Teigstücken abzulegen.

Problematisch bei den bekannten Verfahren und Anlagen ist der grosse Platzbedarf, der zwischen Gärschrank und Ofenanlage für das Zwischenband und der Übergabeeinrichtung benötigt wird.

Der Erfindung liegt somit die Aufgabe zugrunde ein Verfahren und eine Vorrichtung zur raumsparenden Übergabe für gegärte Teiglinge zu schaffen, die es ermöglichen auch ohne Zwischenraum zwischen Gärschrank und einem oder mehreren Öfen eine automatische Überführung zu realisieren.

Diese Aufgabe wird bei einem Verfahren der gattungsgemässen Art durch die Merkmale im Kennzeichnungsteil des Anspruches 1 gelöst.
Durch die erfindungsgemässe Formierung der gegärten Teiglinge innerhalb des Gärschrankes wird der sonst dafür benötigte Raumbedarf, der etwas grösser als der Teiglingsverband sein muss, eingespart. Ein weiterer Vorteil für die Platzeinsparung ist durch die seitliche Ausgabe der gegärten Teiglinge gegeben. Hierdurch lässt sich der Gärschrank einer Ofenanlage direkt ohne Zwischenraum zuordnen, wodurch eine automatisierte Überführung mittels einer vor der Ofenfront verfahrbaren Abzieheinrichtung auf engstem Raum gegeben ist.

In Weiterbildung der Erfindung nach den Merkmalen des Anspruches 2 ist eine vorteilhafte formierung der Teiglinge und eine exakte Zentrierung des so gebildeten Teiglingsverbandes zur Abzieheinrichtung ermöglicht.

Über den Inkrementalgeber und der Steuerung, für die vorzugsweise eine den Gesamtprozess (Ofenanlage, Gärschrank, Übergabeeinrichtung) regelende speicherprogrammierbare Steuerung (SPS) zum Einsatz kommt, lässt sich jeder gewünschte Reihenabstand im Teiglingsverband realisieren.

Die der Erfindung zugrundeliegende Aufgabe wird bei einer Vorrichtung der gattungsgemässen Art durch die Merkmale im Kennzeichnungsteil des Anspruches 3 gelöst. Hiernach wird eine sichere Abnahme der gegärten Teiglinge von den Gärdielen im Gärschrank durch das ortsfest angeordnete Abziehband sowie die jeweils gewünschte Formierung der Teiglinge ermöglicht. Die erfindungsgemässe seitliche Ausgabeöffnung, die wahlweise in der linken und/oder rechten Seitenwand des Gärschrankes angeordnet werden kann, ergibt eine weitere Variaton der Aufstellungsmöglichkeit des Gärschrankes.

Selbstverständlich kann dieser Gärschrank auch bei einer teilautomatisierten oder manuellen Überführung der gegärten Teiglinge zum Einsatz kommen.

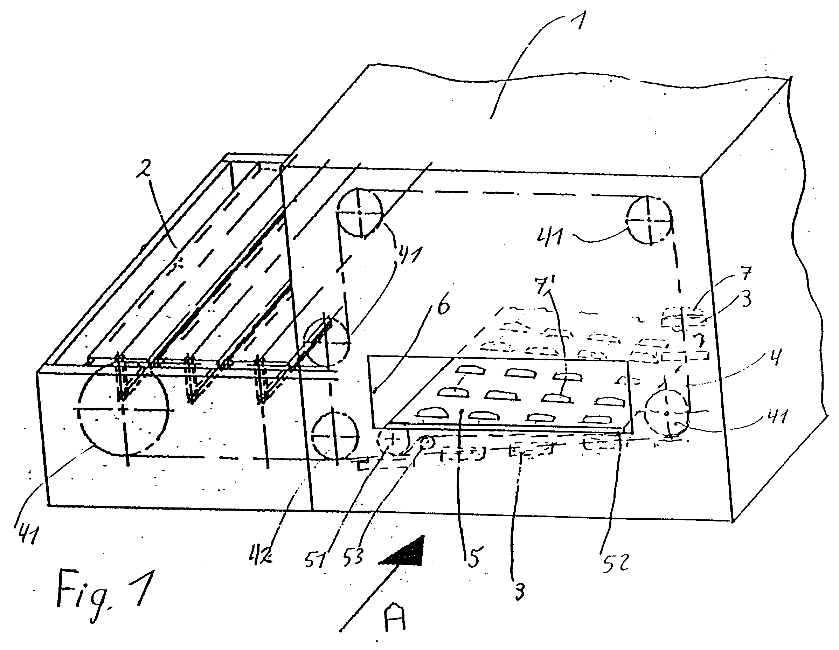

Die Erfindung wird nachstehend anhand einer Zeichnung näher beschrieben. Es zeigt
- Fig. 1: eine schematische Darstellung eines Dielengärschrankes

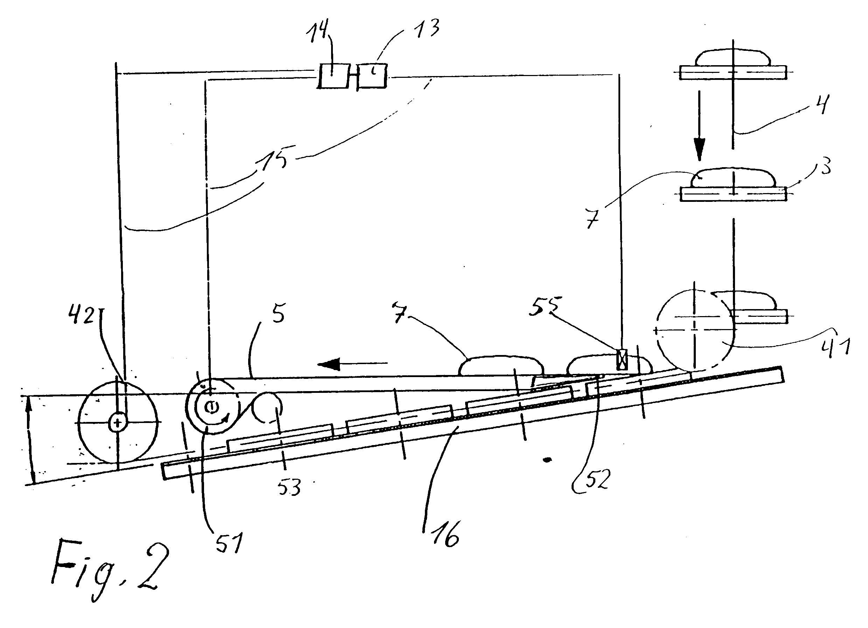

- Fig. 2: Die Anordnung des Abziehbandes 5 zum Kettenpaar 4 und Gärdiele 3 als Einzelheit in der Pfeilrichtung A gemäss Fig. gesehen
- Fig. 3: eine mögliche Anordnung des Gärschrankes 1 zu einer aus mehreren Etagenbacköfen bestehenden Ofenanlage mit einer vor der Ofenfront verfahrbaren Abzieheinrichtung.

Der mit 1 bezeichnete Gärschrank besteht aus einem Dielengärschrank, bei dem die Teiglinge 7 an eine Aufgabestation 2 den Gärdielen 3 zugeführt werden. Danach laufen die zwischen einem Kettenpaar 4 eingehangene Gärdielen 3 mit den Teiglingen 7 kontinuierlich durch den Innenraum des Gärschrankes 1. Das Kettenpaar 4 wird über Kettenräder 42 angetrieben und mittels Kettenumlenkräder 41 umgelenkt.

Im unteren Bereich des Gärschrankes 1 wird das Kettenpaar 4 von der senkrechten kommend in einer geneigten nach unten verlaufenden Bahn zur Aufgabestation 2 zurückgeführt. Diese Neigung beträgt ca. 7-10°. In diesem Neigungsbereich ist das Abziehband 5 waagerecht zwischen dem Kettenpaar 4 ortsfest angeordnet.
Dabei ist die Bandspitze 52 der unteren Kettenumlenkung so zugeordnet, dass die Gärdielen 3 unter diese Bandspitze 52 tauchen. Hierbei werden die Teiglinge 7 von den Gärdielen 3 auf das Abziehband 5 geschoben. Durch die Lichtschranke 55 wird das Annähern der Teiglinge 7 auf den Gärdielen 3 signalisiert.

Die Gärdiele 3 läuft schräg unter dieser Lichtschranke 55 hindurch, während die Teigstückspitze den Kontakt auslöst. Das Abziehband 5 beginnt zu laufen und nimmt von der sich bewegenden Gärdiele 3 das Teigstück 7 mit gleicher Geschwindigkeit ab. Der Weg, den das Band 5 zwischen Start und Stop zurücklegt, wird über ein Inkrementalgeber 13 und die Steuerung 14 (SPS) voreingestellt. Für normale 1kg-Brote werden so vier Gärdielen 3 abgekrabbelt, d.h. das Abziehband 5 im Gärschrank 1 dessen Tiefe genau der zu beschickenden Ofentiefe entspricht, ist mit vier Reihen Teiglinge 7 optimal dicht belegt. Nachdem vier Reihen von den Gärdielen 3 abgekrabbelt wurden, sind am Inkrementalgeber 13 an der Antriebsrolle 51 des Abziehbandes 5 entsprechend viel Impulse aufgelaufen, so dass die SPS 14 das Band 5 nach der vierten Diele mittig zur seitlichen Ausgabeöffnung 6 justiert. Jetzt kann über die Ausgabeöffnung 6 die verfahrbare Abzieheinrichtung 8 das Abziehband 5 entleeren.

Über Leitungen 15 sind die SPS 14 und der Inkrementalgeber 13 mit der Lichtschranke 55 und den Antriebsmotoren der Kettenräder 42 bzw. der Antriebsrolle 51 verbunden. Mit 53 ist eine Spannrolle für das Abziehband 5 bezeichnet.
Ein unten schräg angeordnetes Blech 16 dient als Führung für die untere schräge Rückführung des Kettenpaares 4.

Der bisher dargestellte Sachverhalt gilt sowohl für die im Gärschrank freisitzende Brote (glatte Gärdielen) wie auch für Gärdielen mit Körbchen.

Für den Fall der Korbgare können die glatten Dielen als Wendedielen ausgeführt werden, eine Seite glatt, die andere Seite mit aufgesetztem Körbchen. Vor dem inneren Abziehband 5 ist dann eine Kippstation angeordnet, die jeweils eine Diele auf die Spitze des Abziehbandes durch Umkippen entleert. Danach taktet das Abziehband 5 wie oben beschrieben.

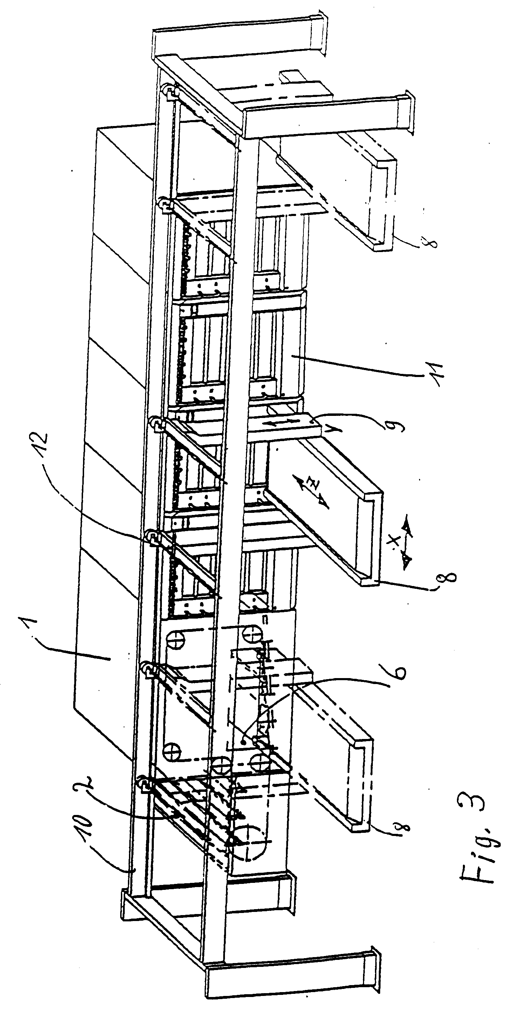

In Fig. 3 ist eine Möglichkeit der direkten Zuordnung eines Gärschrankes 1 ohne Zwischenraum zu einer aus 4 Etgenbacköfen 11 bestehenden Ofenanlage dargestellt. Vor dieser Ofenfront ist eine frei aufgestellte selbsttragende Laufbahn 10 für eine Laufkatze 12 aufgestellt. An der Laufkatze 12 ist über zwei stabile Hubsäulen 9 die Abzieheinrichtung 8 angeordnet. Die mit einem nicht näher beschriebenen und nicht gezeigten in Z-Richtung antreibbaren Krabbelband ausgerüstete Abzieheinrichtung 8 ist in der Lage, über die Ausgabeöffnung 6 den Gärschrank 1 (Band 5) zu entleeren und den so entnommenen Teiglingsverband 7' in einer beliebig durch die SPS 14 ansteuerbare Etage eines der Öfen 11 abzulegen. Die anderen Bewegungsabläufe in der X und Y Richtung der Abzieheinrichtung 8, welche auch über die SPS 14in Abhängigkeit des jeweiligen Backprogrammes gesteuert werden, sind nicht näher erläutert, da diese nicht erfindungswesentlich sind.

## Patentansprüche

1. Verfahren zum Überführen von gegärten Teiglingen von einem Gärschrank zu einer Ofenanlage, wobei die den Gärschrank von einer Aufgabenstation aus kontinuierlich durchlaufenden Teiglinge an der Ausgabestation über Sensoren ermittelt und zu einem Teiglingsverband ausgerichtet werden, wobei die ausgerichteten Teiglinge von einer verfahrbaren Abzieheinrichtung aufgenommen und gezielt auf der (den) Backfläche(n) einer Ofenanlage übergeben werden, dadurch gekennzeichnet, dass die Teiglinge (7) nach Massgabe der zu beschickenden Ofenanlage mittels eines innerhalb des Gärschrankes (1) schrittweise angetriebenen und ortsfest angordneten Abziehbandes (5) formiert und anschliessend zu einer seitlichen Ausgabeöffnung (6) des Gärschrankes (1) zentriert werden und hiernach werden diese mit der verfahrbaren Abzieheinrichtung (8) von dem Abziehband (5) aus dem Gärschrank (1) entnommen und in der Ofenanlage abgelegt.

2. Verfahren nach Anspruch 1, dadurch gekennzeichnet, dass das Abziehband (5) die Teiglinge (7) mit gleichlaufender Geschwindigkeit von im Gärschrank umlaufenden Gärdielen (3) entnimmt, wobei das Herannahen der Gärdielen (3) über eine Lichtschranke (55) erkannt und der Start-Stop-Betrieb des Abziehbandes (5) zur Erzielung der gewünschten Abstände im Teiglingsverband (7') über einen Inkrementalgeber (13) und einer Steuerung (14) vorgegeben sind.

3. Vorrichtung zur Durchführung des Verfahrens nach Anspruch 1 und 2, bestehend aus einem Dielengärschrank mit an einem Kettenpaar eingehangenen Gärdielen, welche über Kettenräder und Kettenumlenkräder kontinuierlich den Gärschrank durchlaufen, wobei die an einer Aufgabestation mit Teiglingen belegten Gärdielen nach dem Durchlaufen des Gärschrankes und der Entnahme der gegärten Teiglinge zur Aufgabestation zurückkehren, dadurch gekennzeichnet, dass das Kettenpaar (4) im unteren Bereich des Gärschrankes (1) von der senkrechten kommend in einer geneigten nach unten verlaufenden Bahn zur Aufgabesation (2) durch Umlenkung zurückgeführt ist, wobei in diesem schrägen Bereich zwischen den beiden Ketten des Kettenpaares (4) ein schrittweise angetriebenes und orstfest angeordnetes lichtschrankgesteuertes Abziehband (5) mit seiner Bandspitze (52) zur Abnahme der Teiglinge (7) von den Gärdielen (3) der Umlenkung zugeordnet ist und dass in Höhe dieses waagerecht verlaufenden Abziehbandes (5) eine Ausgabeöffnung (6) in einer Seitenwand des Gärschrankes (1) rechtwinkling zur Aufgabenstation (2) angeordnet ist.

## Claims

1. Method of transferring fermented dough pieces from a fermenter to an oven system, the dough pieces which, coming from a charging station, continuously pass through the fermenter being detected by sensors at the charging station and aligned to constitute a formation of dough pieces, the aligned dough pieces being taken by a displaceable withdrawal device and appropriately transferred to the baking plate(s) of an oven system, characterized in that, subject to the oven system to be charged, the dough pieces are aligned by means of a withdrawal belt (5) which is stepwise driven and stationarily disposed within the fermenter (1) and are then centered towards, and relative to, a lateral discharge opening (6) of the fermenter (1), after which they are taken off the withdrawal belt (5) and removed from the fermenter (1) and deposited in the oven system by means of the displaceable withdrawal device (8).

2. Method according to claim 1, characterized in that the withdrawal belt (5) removes the dough pieces (7) at a synchronous speed from fermentation boards (3) which circulate in the fermenter, the approach of the fermentation boards (3) being detected by a light barrier (55) and the start-stop operation of the withdrawal belt (5) for obtaining the desired distances within the formation of dough pieces (7') being given by way of an incremental position transducer (13) and a control system (14).

3. Device for putting into practice the method according to claim 1 and 2, comprising a board fermenter with fermentation boards which are suspended on a pair of chains and continuously pass through the fermenter via chain wheels and chain deflection wheels, the fermentation boards charged with dough pieces at a charging station returning to the charging station after passing through the fermenter and after withdrawal of the fermented dough pieces, characterized in that in the lower portion of the fermenter (1), the pair of chains (4) is returned by deflection to the charging station (2), starting from the vertical and continuing on an inclined downward path, a stepwise driven and light-barrier controlled stationary withdrawal belt (5), by its belt tip (52), being allocated to the deflection for the withdrawal of the dough pieces (7) from the fermentation boards (3) in this inclined portion between the two chains of the pair of chains (4), and in that at the height of this horizontal withdrawal belt (5), a discharge opening (6) is disposed in a side wall of the fermenter (1) at right angles to the charging station (2).

## Revendications

1. Procédé de transfert de pâtons fermentés d'une armoire de fermentation à un four, les pâtons qui circulent en continu dans l'armoire de fermentation à partir d'un poste de chargement étant détectés par l'intermédiaire de capteurs au niveau du poste de déchargement et alignés en une file de pâtons, les pâtons alignés étant prélevés par un dispositif mobile d'enlèvement et transférés, de manière appropriée, sur la ou sur les plaque(s) de cuisson d'un four, caractérisé en ce que les pâtons (7) sont formés, en fonction du four à alimenter, au moyen d'une courroie d'extraction (5) placée, et entrainée par paliers, à l'intérieur de l'armoire de fermentation (1) et en ce qu'ils sont ensuite positionnées vers une ouverture latérale de déchargement (6) de l'armoire de fermentation (1) pour être retirés par le dispositif mobile d'extraction (8) à partir de la courroie d'extraction, hors de l'armoire de fermentation (1) et pour être déposés dans le four.

2. Procédé selon la revendication 1, caractérisé en ce que la courroie d'extraction (5) prélève les pâtons (7), à une vitesse synchrone, à partir de planches de fermentation (3) qui circulent dans l'armoire de fermentation, l'approche des planches de fermentation (3) étant reconnue par l'intermédiaire d'une barrière photoélectrique (55) et le fonctionnement de marche et d'arrêt de la courroie d'extraction (5) étant prédéfini par l'intermédiaire d'une commande incrémentale (13) et d'un dispositif de commande (14), pour l'obtention des écartements souhaités dans la file de pâtons (7').

3. Dispositif destiné à la mise en oeuvre du procédé selon les revendications 1 et 2, consistant en une armoire de fermentation à planches comportant des planches de fermentation accrochées à une paire de chaînes, et qui circulent en continu dans l'armoire de fermentation par l'intermédiaire de roues à chaînes et de roues de renvoi de chaînes, les planches de fermentation, recouvertes de pâtons dans un poste de chargement, revenant au poste de chargement, après avoir circulé dans l'armoire de fermentation et après le prélèvement des pâtons fermentés, au niveau du poste de déchargement, caractérisé en ce que la paire de chaînes (4) est ramenée par déviation au poste de chargement (2), dans la partie inférieure de l'armoire de fermentation (1), en partant de la verticale et en suivant un trajet qui va en s'inclinant vers le bas, tandis qu'il est prévu, dans cette zone oblique, entre les deux chaînes de la paire de chaînes (4), une courroie d'extraction (5) entraînée par paliers et disposée à demeure, commandée par une barrière photoélectrique, et comportant une pointe de courroie (52) pour enlever les pâtons (7) des planches de fermentation (3), cette courroie d'extraction étant associée à la déviation, et en ce qu'une ouverture de déchargement (6) est prévue, à la hauteur de cette courroie d'extraction (5) et s'étend horizontalement, dans une paroi latérale de l'armoire de fermentation (1) à angle droit par rapport au poste de chargement (2).
